# EUROPÄISCHE PATENTSCHRIFT

(11) **EP 2 703 436 B1**
(45) Veröffentlichungstag und Bekanntmachung des Hinweises auf die Patenterteilung: **22.02.2017**
(21) Anmeldenummer: 12182022.9
(22) Anmeldetag: 28.08.2012
(51) Int. Cl.: C08K 7/14

(54) **Polyamidformmasse und deren Verwendung**
Polyamide moulding material and its application
Masse moulée en polyamide et son utilisation

(43) Veröffentlichungstag der Anmeldung: 05.03.2014
(73) Patentinhaber: EMS-PATENT AG, 7013 Domat/Ems (CH)
(72) Erfinder: Pfleghar, Mark, 7013 Domat/Ems (CH); Stöppelmann, Georg, 7402 Bonaduz (CH); Harder, Philipp, 7000 Chur (CH); Lamberts, Nikolai, 7402 Bonaduz (CH)
(74) Vertreter: Bremi, Tobias Hans

(56) Entgegenhaltungen:
- EP-A1- 1 882 719

## Beschreibung

### TECHNISCHES GEBIET

Die vorliegende Erfindung betrifft unter Zuhilfenahme von Glasfasern als auch von partikulären Füllstoffen verstärkte thermoplastische Formmassen, insbesondere Polyamidformmassen sowie daraus hergestellte Bauteile. Spezifisch betrifft die Erfindung thermoplastische Formmassen, insbesondere Polyamidformmassen mit verbesserten mechanischen Eigenschaften. Erreicht wird dies durch eine Kombination von thermoplastische Kunststoffen, insbesondere Polyamid, partikulären Füllstoffen sowie hochfesten Glasfasern, die sich im Wesentlichen aus Siliciumdioxid, Aluminiumoxid und Magnesiumoxid zusammensetzen. Verwendung finden die erfindungsgemäßen Formmassen für die Herstellung beliebiger Formkörper/Bauteile, Halbzeuge bzw. Fertigteile.

### STAND DER TECHNIK

Polyamide sind weit verbreitet als Strukturelemente für den Innen- und Außenbereich, was im Wesentlichen auf die hervorragenden mechanischen Eigenschaften zurückzuführen ist. Eine Verbesserung der mechanischen Eigenschaften, wie Festigkeit und Steifigkeit, lässt sich insbesondere durch den Zusatz faserförmiger Verstärkungsstoffe, z.B. Glasfasern, erreichen. In vielen Fällen werden neben den Glasfasern auch noch teilchenförmige Füllstoffe verwendet, sei es, um die Formmassen mittels anorganischer Pigmente einzufärben, oder um andere spezifische Eigenschaftsmodifizierungen vorzunehmen. Durch den Zusatz von partikulären Füllstoffen zu den glasfaserverstärkten Formmassen werden die mechanischen Eigenschaften aber in der Regel deutlich verschlechtert, insbesondere wird die Reissfestigkeit, die Reissdehnung sowie die Schlagzähigkeit reduziert. Dies hat zur Folge, dass in Verbindung mit Glasfasern keine oder nur geringe Gehalte an partikulären Füllstoffen, eingesetzt werden können, wenn die Reissfestigkeit sowie die Schlagzähigkeit als kritische Parameter für das Formteil angesehen werden. Einerseits bewirkt also der Zusatz von partikulären Füllstoffen zu glasfaserverstärkten Formmassen die gewünschte Pigmentierung bzw. Funktionalität, führt aber andererseits zu einer Verschlechterung hinsichtlich der mechanischen Eigenschaften, wie der Reissfestigkeit und der Zähigkeit.

Bei der Verstärkung von Polyamidformmassen durch Glasfasern kommen praktisch ausschliesslich sogenannte E-Glasfasern mit rundem Querschnitt zum Einsatz. E-Glasfasern bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid. E-Glasfasern haben eine Dichte von 2.54 - 2.62 g/cm3, einen Zug-E-Modul von 70 - 75 GPa, eine Zugfestigkeit von 3000 - 3500 MPa und eine Reissdehnung von 4.5 - 4.8%, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Werden erhöhte Anforderungen an die mechanischen Eigenschaften, insbesondere die Schlagzähigkeit oder die sogenannte Querfestigkeit und darüber hinaus an den Verzug gestellt, bieten E-Glasfasern mit nicht-kreisförmigem Querschnitt, sogenannte flache Glasfasern eine mögliche Problemlösung. Bekannt sind solche flachen Glasfasern, die ein Achsenverhältnis der Querschnittsachsen im Bereich von 2 bis 4 aufweisen. Es ist zu erwarten, dass durch eine weitere Optimierung der Querschnittsgeometrie über dieses Achsenverhältnis hinaus nur noch eine geringe Verbesserung der mechanischen Eigenschaften und des Verzugs zu erreichen sind.

Aus der EP 1 882 719 ist eine Polyamid-Formmasse bekannt, umfassend mindestens ein transparentes Polyamid in einem Anteil von 40-79 Gew.%, mindestens ein Verstärkungsfasermaterial in einem Anteil von 15-49 Gew.%, ein teilchenförmiger Füllstoff in einem Anteil von 6-30 Gew.%, und mindestens einen weiteren Zusatzstoff in Form eines Polyamid-Oligomeren.

### DARSTELLUNG DER ERFINDUNG

Es ist entsprechend unter anderem Aufgabe der vorliegenden Erfindung, verbesserte, unter Zuhilfenahme von Glasfasern als auch von partikulären Füllstoffen verstärkte thermoplastische Formmassen, insbesondere Polyamidformmassen sowie daraus hergestellte Bauteile zur Verfügung zu stellen.

Diese Aufgabe wird durch die Formmassen gemäss Anspruch 1 gelöst sowie durch auf Basis solcher Formmassen hergestellte Bauteile.

Betrachtet man Glasfasern mit gleicher Querschnittsfläche und Durchmesser, so lassen sich Verbesserungen nur noch durch andere Zusammensetzungen des Glasrohstoffes, durch welche die Festigkeit, Dehnung oder Steifigkeit der Glasfilamente verbessert werden, erreichen. Beispielsweise sind S-Glasfasern, die derzeit fast ausschliesslich in Form von Rovings (Endlosfasern) für militärische Einsatzzwecke verwendet werden, den E-Glasfasern hinsichtlich der Glasfilamenteigenschaften überlegen. Gemäss ASM Handbook, Vol. 21: Composites (#06781G) besitzen S-Glasfasern im Vergleich zu E-Glasfasern eine um 12% höhere Steifigkeit, eine um 25% höhere Reissfestigkeit und eine um 20% höhere Reissdehnung. Untersuchungen mit S-Glasfaser verstärkten Polyamidformmassen zeigen jedoch, dass diese Vorteile betreffend der Glasfaser selbst nicht oder nur sehr bedingt auf die glasfaserverstärkte Polyamidformmasse übertragen werden können, auch dann nicht, wenn die Schlichte für diese Formmassen optimiert wurde. In vielen Compounds, die keine partikulären Füllstoffe enthalten, ist sogar die E-Glasfaser mit rundem oder flachem Querschnitt der Hochleistungs-S-Glasfaser überlegen.

Es zeigt sich nun aber überraschenderweise, dass es möglich ist, Polyamidformmassen, die neben Glasfasern auch partikuläre Füllstoffe enthalten, bereitzustellen, mit denen Formkörper mit guten mechanischen Eigenschaften, insbesondere mit hoher Steifigkeit, hoher Reissfestigkeit und guter Schlagzähigkeit herstellbar sind und die nicht die zuvor beschriebenen Nachteile des Standes der Technik aufweisen.

Konkret betrifft die vorliegende Erfindung eine bevorzugt hauptsächlich auf Polyamid basierende Formmasse mit hoher Steifigkeit, Reissfestigkeit und Schlagzähigkeit bestehend aus:
(A) 20 - 88 Gew.-% thermoplastischem Kunststoff. Dabei ist diese thermoplastische Komponente (A) bevorzugt aufgebaut aus Polyamid (A1) mit der Massgabe, dass bis zu 40%, vorzugsweise bis zu 20%, bis zu 10% oder bis zu 5% (jetzt jeweils bezogen auf den Gewichtsanteil der Gesamtkomponente (A) in der Formmasse), des Polyamids (A1) ersetzt sein können durch einen thermoplastischen Kunststoff (A2) nicht auf Polyamidbasis;
(B) 10 - 70 Gew.-% faserförmige Zuschlagstoffe, namentlich ausschliesslich aufgebaut aus den folgenden Komponenten (B1), (B2) und (B3):
   (B1) 10 - 70 Gew.-% hochfesten Glasfasern, die im Wesentlichen aus den Komponenten Siliciumdioxid, Aluminiumoxid und Magnesiumoxid aufgebaut sind, welche einen Gehalt an Magnesiumoxid von wenigstens 5 Gew.-% und einen Gehalt an Calciumoxid von höchstens 10 Gew.-%, insbesondere bevorzugt von höchstens 5 Gew.-% aufweisen, oder Mischungen davon;
   (B2) 0 - 20 Gew.-% andere, von den Glasfasern der Komponente (B1) verschiedene Glasfasern, bevorzugt solche, die im Wesentlichen aus den Komponenten Siliciumdioxid, Calciumoxid und Aluminiumoxid aufgebaut sind und insbesondere bevorzugt zudem das Gewichtsverhältnis SiO₂/(CaO+MgO) kleiner 2.7, bevorzugt kleiner 2.5 und insbesondere zwischen 2.1 und 2.4 ist;
   (B3) 0 - 20 Gew.-% weitere, von den Fasern der Komponenten (B1) und (B2) verschiedene faserförmige Zuschlagstoffe, insbesondere bevorzugt ausgewählt aus der Gruppe: Kohlenstoffasern, Graphitfasern, Aramidfasern, Nanotubes;
(C) 2 - 40 Gew.-% partikulärer Füllstoff;
(D) 0 - 2 Gew.-% Additive;
wobei die Summe aus (A) - (D) 100 Gew.-% ausmacht.

Die Komponente (A) ist dabei bevorzugtermassen ein thermoplastischer Kunststoff ausgewählt aus der folgenden Gruppe: Polyamid, Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, flüssigkristalline Polymere, Polyetherketon, Polyetheretherketon, Polyimid, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme. Solche Systeme können dabei weiterhin bevorzugt in Kombination mit den unten angegebenen und unter (A2) diskutierten Schlagzähmodifikatoren eingesetzt werden.

Bevorzugtermassen liegt dabei der Anteil an Komponente (A) im Bereich von 25-82 Gew.-%, vorzugsweise im Bereich von 30-77 Gew.-%.

Der Anteil an Komponente (B1) liegt bevorzugtermassen im Bereich von 15-65 Gew.-%, vorzugsweise im Bereich von 20-60 Gew.-%.

Der Anteil an Komponente (C) liegt bevorzugtermassen im Bereich von 3-25 Gew.-%, vorzugsweise im Bereich von 3-15 Gew.-%.

Wie erläutert besteht die Formmasse, respektive deren Kompontente (A), bevorzugt zur Hauptsache, das heisst bevorzugtermassen zu mehr als 60 % bezogen auf die Kunststoffmatrix, aus Polyamid. Mit anderen Worten ist bevorzugtermassen das Verhältnis von (A1) zu (A2) auf jeden Fall >1.5, vorzugsweise >2, insbesondere vorzugsweise >5.

Der andere thermoplastische Kunststoff (Komponente A2), der in Form einer Mischung mit dem Polyamidbestandteil (A1) ebenfalls vorhanden sein kann, ist vorzugsweise ausgewählt aus der Gruppe bestehend aus: Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, Flüssigkristalline Polymere, Polyetherketon, Polyetheretherketon, Polyimid, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme.

In einer weiteren Ausführungsform enthält die erfindungsgemässe Formmasse als Komponente (A2) bis zu 40 Gew.-% eines oder mehrerer Schlagzähmodifikatoren (SZM). Bevorzugt wird eine SZM-Konzentration im Bereich zwischen 5 und 40 Gew.-%, insbesondere von 7-30 Gew.-%. Der Schlagzähmodifier kann ein Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein. Der Schlagzähmodifier (A2) kann auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und copolymeres wie Ethylen-Propylen-, Ethylen-Propylen-Dien- und Ethylen-Octen- oder Ethylen-Vinylacteat-Kautschuk oder ein unpolares oder polares Olefinhomo- und copolymeres, das durch Pfropfen oder Copolymerisation mit Säureanhydriden, (Meth)acrylsäure und deren Ester entstanden ist, sein. Der Schlagzähmodifier (A2) kann auch ein carbonsäurefunktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen sein kann, einschliesslich solchen Copolymeren, in denen die Säuregruppen teilweise mit Metallionen neutralisiert sind.

Bevorzugte Schlagzähmodifikatoren der Komponente (A2) auf Basis von Styrolmonomeren (Styrol und Styrolderivate) und anderen vinylaromatischen Monomeren sind Blockcopolymere aufgebaut aus alkenylaromatischen Verbindungen und einem konjungierten Dien, sowie hydrierte Blockcopolymere aus einer alkenylaromatischen Verbindung und konjungierten Dienen oder Kombinationen dieser SZM-Typen. Das Blockcopolymer enthält mindestens einen Block abgeleitet von einer alkenylaromatischen Verbindung (A) und wenigstens einem Block abgeleitet von einem konjungierten Dien (B). Bei den hydrierten Blockcopolymeren wurde der Anteil an aliphatisch ungesättigten Kohlenstoff-Kohlenstoff-Doppelbindungen durch Hydrierung reduziert. Als Blockcopolymere sind Zwei-, Drei-, Vier- und Polyblockcopolymere mit linearer Struktur geeignet. Jedoch sind verzweigte und sternförmige Strukturen ebenfalls einsetzbar. Verzweigte Blockcopolymere erhält man in bekannter Weise, z.B. durch Pfropfreaktionen von polymeren "Seitenästen" auf eine Polymer-Hauptkette. Als alkenylaromatische Monomere können neben oder in Mischung mit Styrol, auch vinylaromatische Monomere verwendet werden, die am aromatischen Ring und/oder an der C=C-Doppelbindung mit C1-20-Kohlenwasserstoffresten oder Halogenatomen substituiert sind.

Beispiele für alkenylaromatische Monomere sind Styrol, p-Methylstyrol, α-Methylstyrol, Ethylstyrol, tert.-Butylstyrol, Vinyltoluol, 1,2-Diphenylethylen, 1,1-Diphenylethylen, Vinylxylole, Vinyltoluole, Vinylnaphthaline, Divinylbenzole, Bromstyrole, Chlorstyrole, sowie Kombinationen davon. Bevorzugt werden Styrol, p-Methylstyrol, alpha-Methylstyrol und Vinylnaphthalin.

Bevorzugt verwendet man Styrol, α-Methylstyrol, p-Methylstyrol, Ethylstyrol, tert.-Butylstyrol, Vinyltoluol, 1,2-Diphenylethylen, 1,1-Diphenylethylen oder deren Mischungen. Besonders bevorzugt wird Styrol eingesetzt. Es können aber auch Alkenylnaphthaline verwendet werden.

Als Dienmonomere kommen z.B. 1,3-Butadien, 2-Methyl-1,3-butadien, 2,3-Dimethyl-1,3-butadien, 1,3-Pentadien, 1,3-Hexadien, Isopren, Chloropren und Piperylen in Betracht. 1,3-Butadien und Isopren sind bevorzugt, insbesondere 1,3-Butadien (nachfolgend kurz als Butadien bezeichnet).

Bevorzugt verwendet man als alkenylaromatisches Monomer Styrol und als Dienmonomer Butadien, d.h. bevorzugt ist das Styrol-Butadien-Blockcopolymer. In der Regel werden die Blockcopolymere durch anionische Polymerisation in an sich bekannter Weise hergestellt. Weiterhin kann man zusätzlich zu den Styrol- und Dienmonomeren weitere Comonomere mitverwenden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren. Geeignete Comonomere sind z.B. Acrylate, insbesondere C1-12-Alkylacrylate wie n-Butylacrylat oder 2-Ethylhexylacrylat, und die entsprechenden Methacrylate, insbesondere Cl-12-Alkylmethacrylate wie Methylmethacrylat (MMA). Weitere mögliche Comonomere sind (Meth)acrylnitril, Glycidyl(meth)acrylat, Vinylmethylether, Diallyl- und Divinylether bifunktioneller Alkohole, Divinylbenzol und Vinylacetat.

Zusätzlich zum konjugierten Dien enthalten die hydrierten Blockcopolymere der Komponente (A2) gegebenenfalls noch Anteile an niederen Kohlenwasserstoffen wie z.B. Ethylen, Propylen, 1-Buten, Dicyclopentadien oder nicht-konjugierte Diene. In den hydrierten Blockcopolymeren ist der Anteil der nicht reduzierten aliphatischen ungesättigten Bindungen, die aus dem Block B resultieren, kleiner 50%, bevorzugt kleiner 25%, insbesondere kleiner 10%. Die aromatischen Anteile aus Block A werden maximal zu 25% reduziert. Die hydrierten Blockcopolymere Styrol-(ethylen-butylen)-Zweiblock und Styrol-(ethylen-butylen)-styrol-Dreiblock-Copolymere werden durch Hydrierung von Styrol-butadien- und Styrol-butadien-styrol-Copolymeren erhalten. Die Blockcopolymere bestehen bevorzugt zu 20 bis 90 Gew.-% aus Block A, insbesondere zu 50 bis 85 Gew.-% aus Block A. Das Dien kann in 1,2- oder in 1,4-Orientierungen in den Block B eingebaut werden.

Die Molmasse der Blockcopolymere der Komponente (A2) beträgt bevorzugtermassen 5'000 bis 500'000 g/mol, bevorzugt 20'000 bis 300'000 g/mol, insbesondere 40'000 bis 200'000 g/mol. Geeignete hydrierte Blockcopolymere sind die kommerziell erhältlichen Produkte, wie z.B. KRATON® (Kraton Polymers) G1650, G1651, und G1652 sowie TUFTEC® (Asahi Chemical) H1041, H1043, H1052, H1062, H1141 und H1272.

Beispiele für nicht-hydrierte Blockcopolymere sind Polystyrol-polybutadien, Polystyrol-poly(ethyen-propylen), Polystyrol-polyisopren, Poly(α-methyl-styrol)-polybutadien, Polystyrene-polybutadien-polystyrol (SBS), Polystyrol-Poly(ethylene-propylen)-polystyrol, Polystyrol-polyisopren-polystyrol und Poly(α-methylstyrol-polybutadiene-poly(α-methylstyrol), als auch Kombinationen davon.

Geeignete nicht-hydrierte Blockcopolymere, die kommerziell erhältlich sind, sind verschiedene Produkte mit dem Markennamen SOLPRENE® (Phillips), KRATON® (Shell), VECTOR® (Dexco) und SEPTON® (Kuraray).

Gemäss einer weiteren bevorzugten Ausführungsform sind die erfindungsgemässen Formmassen dadurch gekennzeichnet, dass die Komponente (A2) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12- a -Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente C um Ethylen-Propylen-Kautschuk und/oder LLDPE und/oder VLDPE handelt.

Alternativ oder zusätzlich (beispielsweise in Mischung) kann (A2) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1) heptadien, Hexadien-1.4, Dicyclopentadien und/oder insbesondere 5-Ethylidennorbornen.

In Frage als Bestandteil für die Komponente (A2) kommen zudem auch Ethylen-AcrylatCopolymere. Weitere mögliche Formen als Bestandteile für die Komponente (A2) sind die Ethylen-Butylen-Copolymere beziehungsweise Mischungen (Blends), welche derartige Systeme enthalten.

Bevorzugtermassen verfügt die Komponente (A2) über Bestandteile mit Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise werden 0.1 bis 4.0 Gew.-% eines ungesättigten Anhydrids an die Schlagzähkomponente als Bestandteil von (A2) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0%, insbesondere bevorzugt in einem Bereich von 0.3-0.7%. Auch möglich als Bestandteil der Komponente (A2) ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%. Die oben angegebenen möglichen Systeme für die Komponente können auch in Mischungen verwendet werden.

Weiterhin kann die Komponente (A2) über Bestandteile verfügen, welche über funktionelle Gruppen, wie z.B. Carbonsäure-, Ester-, Epoxy-, Oxazolin-, Carbodiimid-, Isocyanat-, Silanol- und Carboxylat-Gruppen verfügen, oder Kombinationen von zwei oder mehrerer der genannten funktionellen Gruppen enthalten. Monomere, die diese funktionellen Gruppen tragen, können durch Co-Polymerisation oder Pfropfung an das elastomere Polyolefin gebunden werden. Ausserdem können die SZM auf Basis der Olefinpolymere auch durch Pfropfung mit einer ungesättigten Silanverbindung, z. B. Vinyltrimethoxysilan, Vinyltriethoxysilan, Vinyltriacetosilan, Methacryloxypropyltrimethoxysilan oder Propenyltrimethoxysilan modifiziert sein.

Die elastomeren Polyolefine sind statistische, alternierende oder segmentierte Copolymere mit linearer, verzweigter oder Core-Shell-Struktur und enthalten funktionelle Gruppen, die mit den Endgruppen der Polyamide reagieren können, so dass eine ausreichende Verträglichkeit zwischen Polyamid und SZM resultiert.

Die als Komponente (A2) eingesetzten SZM schliessen damit Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylen-Propylen-Dien-Terpolymere sowie Kombinationen der genannten Polymere.

Beispiele für kommerziell erhältliche Schlagzähmodifier, welche im Rahmen der Bestandteile der Komponente (A2) eingesetzt werden können, sind: TAFMER MC201: g-MAH (-0.6 %) Blend aus 67% EP Copolymer (20 Mol-% Propylen) + 33 % EB Copolymer (15mol-% Buten-1)); TAFMER MH5010: g-MAH (-0.6 %) Ethylen-Butylen-Copolymer; TAFMER MH7010: g-MAH (-0.7 %) Ethylen-Butylen-Copolymer; Mitsui. TAFMER MH7020: g-MAH (-0.7 %) EP-Copolymer von Mitsui Chemicals; EXXELOR VA1801: g-MAH (-0.7 %) EP-Copolymer;.EXXELOR VA1803: g-MAH (0.5-0.9 %) EP Copolymer, amorph; EXXELOR VA1810: g-MAH (-0.5 %) EP-Copolymer; EXXELOR MDEX 94-1 1: g-MAH (0.7 %) EPDM, Exxon Mobile Chemical; FUSABOND MN493D: g-MAH (-0.5 %) Ethylen-Octen-Copolymer; FUSABOND A EB560D (g-MAH) Ethylenn-butyl-acrylat-copolymer; ELVALOY, DuPont.

Bevorzugt wird auch ein Ionomer im Rahmen von Komponente (A2), in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Der Anteil dieser weiteren Matrix-Komponente (A2) liegt bevorzugtermassen im Bereich von 0-20 Gew.-%, vorzugsweise im Bereich von 0-10 Gew.-% oder im Bereich von 0-5 Gew.-%. Bevorzugtermassen gibt es aber keine weitere Matrix-Komponente (A2), d.h. bevorzugtermassen liegt in der Formmasse ausschliesslich Komponente (A1) vor.

Neben der in der Hauptsache in der Formmasse vorliegenden hochfesten Glasfaser (Komponente B1) kann es weitere andere, von (B1) verschiedene Glasfasern in Form der Komponente (B2) und/oder in Form von nicht auf Glas basierenden Fasern der Komponente (B3) in der Formmasse geben, wobei auch hier der Faser-Anteil, und darin auch der Glasfaser-Anteil zur Hauptsache, das heisst bevorzugtermassen zu mehr als 50 % bezogen auf den Glasfaseranteil, aus der Komponente (B1) besteht. Mit anderen Worten ist bevorzugtermassen das Verhältnis von (B1) zur Summe von (B2) und (B3) auf jeden Fall >1, vorzugsweise >2, insbesondere vorzugsweise >5.

Vorzugsweise ist die Komponente (B2) ausgewählt aus der Gruppe bestehend aus E-Glasfasern (diese bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm3, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), , Basaltfasern(ist eine Mineralfaser mit der ungefähren Zusammensetzung: 52% SiO₂, 17% Al₂O₃, 9% CaO, 5% MgO, 5% Na₂O, 5% Eisenoxid sowie weiterer Metalloxide), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Besonders bevorzugt ist Komponente B2 eine Glasfaser, die im Wesentlichen aus den Komponenten Siliciumdioxid, Calciumoxid und Aluminiumoxid aufgebaut ist oder besteht und das Gewichtsverhältnis SiO₂/(CaO+MgO) kleiner 2.7, bevorzugt kleiner 2.5 und insbesondere zwischen 2.1 und 2.4 ist. Insbesondere handelt es sich bei Komponente B2 um eine E-Glasfaser gemäss ASTM D578-00.

Vorzugsweise ist die Komponente (B3) ausgewählt aus der Gruppe bestehend aus: Kohlenstoffasern, Graphitfasern, Aramidfasern, Nanotubes.

Bevorzugt sind die Anteile der Komponenten (B2) und auch von (B3) null.

Die Fasern der Komponente (B1) und/oder (B2) und/oder (B3) können mit kreisförmiger oder nicht-kreisförmiger Querschnittsfläche vorliegen.

Typischerweise liegt der Anteil der Komponente (B2) und/oder der Komponente (B3) bevorzugtermassen im Bereich von 0-10 Gew.-%, vorzugsweise im Bereich von 0-5 Gew.-%. Bevorzugtermassen gibt es bei den faserförmigen Zuschlagsstoffen (B) nur Komponente B1, das heisst der Anteil an Komponente (B2) sowie an (B3) ist null.

Somit enthalten die Formmassen 10 bis 70 Gew.-% oder bis 65 Gew.-% einer hochfesten Glasfaser (B1), die in Form von sogenannten Kurzfasern (z.B. Schnittglas mit einer Länge von 0.2-20 mm) oder Endlosfasern (Rovings) verwendet wird.

Die erfindungsgemässe, hochfeste Glasfaser der Komponente (B1) beruht vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid, wobei eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O) bevorzugt wird.

In einer weiteren Ausführungsform besitzt die hochfeste Glasfaser eine Zusammensetzung von 60-67 Gew.-% Siliciumdioxid (SiO₂), 20-28 Gew.-% Aluminiumoxid (Al₂O₃), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO₂), Boroxid (B₂O₃), Titandioxid (TiO₂), Lithiumoxid (Li₂O).

Insbesondere ist bevorzugt, wenn die hochfeste Glasfaser die nachfolgende Zusammensetzung aufweist: 62-66 Gew.-% Siliciumdioxid (SiO₂), 22-27 Gew.-% Aluminiumoxid (Al₂O₃), 8-12 Gew.-% Magnesiumoxid (MgO), 0- 5 Gew.-% Calciumoxid (CaO), 0-1 Gew.-% weitere Oxide, wie z.B. Zirkoniumdioxid (ZrO₂), Boroxid (B₂O₃), Titandioxid (TiO₂), Lithiumoxid (Li₂O).

Die hochfeste Glasfaser besitzt bevorzugtermassen eine Zugfestigkeit von grösser oder gleich 4000 MPa, und/oder eine Reissdehnung von mindestens 5% und einen Zug-E-Modul von grösser 80 GPa.

Die erfindungsgemässen hochfesten Glasfasern der Komponente (B1) haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5-20 µm, bevorzugt im Bereich von 6-17 µm und besonders bevorzugt im Bereich von 6-13 µm. Sie werden bevorzugt als Kurzglasfaser (Schnittglas mit einer Länge von 0.2 bis 20 mm, bevorzugt 2-12 mm) eingesetzt.

Bei den flachen Glasfasern der Komponente (B1) und/oder (B2), also Glasfasern mit nicht-kreisförmiger Querschnittsfläche, werden solche mit einem Abmessungsverhältnis von der Hauptquerschnittsachse zur senkrecht daraufstehender Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, dies sowohl innerhalb der Komponente (B1) als auch innerhalb der Komponente (B2), wobei der Anteil an flachen Glasfasern bevorzugtermassen überwiegt, d.h. mehr als 50 Gew.-% der Gesamtmasse der Fasern ausmacht.

Die erfindungsgemässen Glasfasern sind bevorzugtermassen mit einer für den jeweiligen Thermoplasten, insbesondere für Polyamid geeigneten Schlichte, beispielsweise enthaltend einen Haftvermittler auf Basis einer Amino- oder Epoxysilanverbindung, versehen.

Die gemäss einer weiteren bevorzugten Ausführungsform sowohl innerhalb der Komponente (B1) als auch innerhalb der Komponente (B2) als Roving eingesetzten hochfesten Glasfasern weisen einen Durchmesser von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5. Diese Endlosfasern, insbesondere bevorzugt innerhalb der Komponente (B1), werden in die erfindungsgemässen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Eine weitere bevorzugte Ausführungsform ist also generell dadurch gekennzeichnet, dass die Glasfasern der Komponente (B1) hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid sind, wobei sie bevorzugtermassen die folgende Zusammensetzung aufweisen: 58-70 Gew.-%, bevorzugt 60-67 Gew.-% Siliciumdioxid, 15-30 Gew.-%, bevorzugt 20-28 Gew.-% Aluminiumoxid, 5-15 Gew.-%, bevorzugt 7-12 Gew.-% Magnesiumoxid, 0-10 Gew.-%, bevorzugt 0-9 Gew.-% Calciumoxid und 0-2 Gew.-%, bevorzugt 0-1.5 Gew.-% weitere Oxide, wie insbesondere Zirkoniumdioxid, Boroxid, Titandioxid oder Lithiumoxid oder eine Kombination dieser Oxide. Die Glasfasern der Komponente (B1) sind weiterhin bevorzugtermassen hochfeste Glasfasern mit der folgenden Zusammensetzung: 62-66 Gew.-% Siliciumdioxid, 22-27 Gew.-% Aluminiumoxid, 8-12 Gew.-% Magnesiumoxid, 0-5 Gew.-% Calciumoxid, 0-1 Gew.-% weitere Oxide, wie insbesondere Zirkoniumdioxid, Boroxid, Titandioxid, Lithiumoxid oder eine Kombination dieser Oxide.

Die Glasfasern der Komponente (B1) weisen bevorzugtermassen eine Zugfestigkeit von wenigstens 3700 MPa, vorzugsweise von wenigstens 3800 oder 4000 MPa auf, und/oder eine Reissdehnung von wenigstens 4.8 %, vorzugsweise von wenigstens 4.9 oder 5.0 % und/oder einen Zug-E-Modul von mehr als 75 GPa, vorzugsweise von mehr als 78 oder 80 GPa, wobei diese Glaseigenschaften an Einzelfasern (pristine single filament) mit einem Durchmesser von 10 µm und eine Länge von 12.7 mm bei einer Temperatur von 23°C und einer relativen Luftfeuchte von 50% zu bestimmen sind.

Konkrete Beispiele für diese hochfesten Glasfasern der Komponente (B1) sind S-Glasfasern von Owens Corning mit 995-Schlichte, T-Glasfasern von Nittobo, HiPertex von 3B, HS4-Glasfasern von Sinoma Jinjing Fiberglass, R-Glasfaern von Vetrotex sowie S-1- und S-2-Glasfasern von AGY.

Die Glasfasern der Komponente (B1) und/oder (B2) können in Form von Kurzfasern, bevorzugt in Form von Schnittglas mit einer Länge im Bereich von 0.2-20 mm, oder in Form von Endlosfasern vorliegen.

Als partikuläre Füllstoffe der Komponente (C) kommen dem Fachmann in dieser Funktion bekannte Füllstoffe in Frage. Hierzu zählen insbesondere partikuläre Füllstoffe ausgewählt aus der Gruppe bestehend aus: Talk, Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie z.B. Bariumsulfat, Zinkoxid, Zinksulfid, Titandioxid, Eisenoxid, Eisenmanganoxid, Metalloxide, insbesondere Spinelle, wie z.B. Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente wie Titan-Zink-Rutil, Nickel-Antimon-Titanat, Chrom-Antimon-Titanat, permanentmagnetischen oder magnetisierbaren Metallen oder Legierungen, hohlkugeligen Silikatfüllstoffen, Aluminiumoxid, Bornitrid, Borcarbid, Aluminiumnitrid, Calciumfluorid und Mischungen hiervon. Die Füllstoffe können auch oberflächenbehandelt sein.

Bevorzugtermassen verfügt die Komponente (C) über eine mittlere Partikelgrösse (D50) im Bereich von 0.1-40 µm, bevorzugt im Bereich von 0.2-20 µm, insbesondere im Bereich von 0.3-10 µm. Bevorzugt wird eine Form der partikulären Füllstoffe, bei denen die Aspektverhältnisse L/b1 und L/b2 beide höchstens 10, insbesondere höchstens 5 sind, wobei die Aspektverhältnisse durch die Quotienten aus grösster Länge L des Teilchens zu dessen mittleren Breite b1 oder b2 beschrieben werden. Dabei liegen b1 und b2, die senkrecht zueinander angeordnet sind, in einer zur Länge L senkrechten Ebene.

Des weiteren bevorzugtermassen verfügt die Komponente (C) über einen von null verschiedenen Absorptionskoeffizienten für UV-, VIS-oder IR-Strahlung, insbesondere für Laserstrahlung, bevorzugt bei einer Wellenlänge im Bereich von 1064 nm, bevorzugtermassen mit einer Absorptionsfähigkeit im sichtbaren und/oder infraroten Strahlungsbereich mit einem Absorptionskoeffizienten von wenigstens 0.05, bevorzugt wenigstens 0.1, und insbesondere bevorzugt wenigstens 0.2.

Die Komponente (A) der Formasse enthält oder besteht bevorzugt aus Polyamid , welches aus aliphatischen, cycloaliphatischen oder aromatischen Monomeren aufgebaut sein kann. Insbesondere enthalten die erfindungsgemässen Formmassen teilkristalline, aliphatische Polyamide, teilkristalline oder amorphe, teilaromatische Polyamide und teilkristalline oder amorphe Polyamide z.B. auf Basis cycloaliphatischer Diamine.

Die erfindungsgemäß eingesetzte Matrix der Polyamidformmassen basiert, wie oben beschrieben wurde, weiterhin bevorzugtermassen auf mindestens einem teilkristallinen, aliphatischen (Komponente A1_1) und/oder teilaromatischen (Komponente A1_2) Polyamid, und/oder auf mindestens einem amorphen Polyamid (Komponente A1_3) auf Basis von cycloaliphatischen Diaminen oder auf einer Mischung der Komponenten A1_1 und A1_2, A1_1 und A1_3 oder einer Mischung des Typs A1_1, A1_2 und A1_3.

Die genannten Polyamide können aus folgenden Dicarbonsäuren hergestellt werden: Adipinsäure, Korksäure, Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemischen daraus.

Als Diamine kommen folgende Monomere in Frage: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p- Xylylendiamin.

Weiterhin können die Polyamide auch auf Lactamen oder Aminocarbonsäuren, insbesondere α,ωAminosäuren oder Lactame mit 6 bis 12 Kohlenstoffatome aufgebaut sein, wobei beispielhaft nachfolgende Auswahl genannt sei: m-Aminobenzoesäure, p-Aminobenzoe-säure Caprolactam (CL), ω-Aminocapronsäure, ω-Aminoheptansäure, ω-Aminoctan-säure, ω-Aminononansäure, ω-Aminodecansäure, ω-Aminoundecansäure (AUA), Laurinlactam (LL) und ω-Aminododecansäure (ADA). Besonderes bevorzugt sind Caprolactam, Aminocapronsäure, Laurinlactam und Aminododecansäure.

Geeignete cycloaliphatische Diamine sind solche mit 6 bis 24 Kohlenstoffatomen, wie z.B. Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMACM), 2,6-Norbornandiamin oder 2,6-Bis-(aminomethyl)-norbornan oder 1,3-Cyclohexyldiamin, 1,4-Cyclohexyldiamin, Bis-(1,3-aminomethyl)cyclohexan, Isophorondiamin, Cyclohexandiamin, 1,3-Bis-(aminomethyl)cyclohexan, 1,4-Bis-(aminomethyl)cyclohexan, Isophorondiamin, Norbornandimethylamin, 2,2-(4,4'-Diaminodicyclohexyl)propan (PACP) oder Mischungen davon. Insbesondere wird alkylsubstituiertes Bis-(aminocyclohexyl)methan oder Bis-(aminocyclohexyl)propan bevorzugt. Als Alkylsubstituenten werden lineare und/oder verzweigte C1-C6, bevorzugt C1-C4 Alkylgruppen bevorzugt, so insbesondere Methyl-, Ethyl-, Propyl-, Isopropyl- oder Butyl-Gruppen bevorzugt, insbesondere bevorzugt Methylgruppen. In einer besonders bevorzugten Ausführungsform wird als alkylsubstituiertes Bis-(aminocyclohexyl)methan das Bis-(4-amino-3-methyl-cyclohexyl)-methan (MACM) eingsetzt.

Die Polyamide A1_1, A1_2 oder A1_3 haben vorzugsweise eine Lösungsviskosität ηᵣₑₗ, gemessen in m-Kresol (0,5 Gew.-%, 20°C) im Bereich von 1,4 bis 3.0, bevorzugt im Bereich von 1,5 bis 2.7, insbesondere im Bereich von 1,5 bis 2.4.

Als aliphatische Polyamide werden bevorzugt Polyamid 46, Polyamid 6, Polyamid 66, Polyamid 11, Polyamid 12, Polyamid 1212, Polyamid 1010, Polyamid 1012, Polyamid 1112, Polyamid 610, Polyamid 612, Polyamid 69, Polyamid 810 oder deren Gemische, Blends oder Legierungen.

Bevorzugte amorphe oder teilkristalline Polyamide auf Basis von cycloaliphatischen Diaminen sind vorzugsweise MACM9, MACM10, MACM11, MACM12, MACM13, MACM14, MACM16, MACM18, PACM9, PACM10, PACM11, PACM12, PACM13, PACM14, PACM16, PACM18 oder Copolyamide, wie z.B. MACMI/12, MACMT/12, 6I/6T/MACMI/MACMT/12, 3-6T, 6I/MACMI/MACMT, 6I/PACMI/PACMT, 6I/6T/MACMI, MACMI/MACM36, 12/PACMI oder 12/MACMT, 6/PACMT, 6/IPDT oder Mischungen daraus MACM10/PACM10 und MACM12/PACM12, und Mischungen davon.

Teilaromatische Polyamide beruhen vorzugsweise entweder auf aromatischen Dicarbonsäuren mit 8 bis 18, bevorzugt 8 bis 14 Kohlenstoffatomen oder auf aromatische Struktureinheiten aufweisende Diamine, wie z.B. PXDA und/oder MXDA. Bevorzugte aromatische Dicarbonsäuren sind TPS, Naphthalindicarbonsäure und IPS. Bevorzugte teilaromatische Polyamide beruhen auf den folgenden Polyamidsystemen: 4T, 5T, DT, 6T, 9T, MT, 10T, 12T, 4I, 5I, DI, 6I, 9I, MI, 10I, 12I. Diese können, sofern es die Verarbeitungstemperatur zulässt, als Homopolyamide sowie als binäre, ternäre oder quaternäre Coolyamide miteinander kombiniert werden. Des Weiteren können auch aliphatische Polyamidsysteme, wie z.B. PA46, PA6, PA66, PA11, PA12, PA1212, PA1010, PA1012, PA610, PA612, PA69, PA810 hinzukombiniert werden.

Bevorzugte teilaromatische Polyamide sind: MXD6, MXD10, MXDI/MXD6, 6T/6I, 6T/66, 6T/10T, 6T/12, 11/10T, 12/10T, 10T/1010, 10I/10T, 10T/1012, 9MT (M steht für 2-Methyloctandiamin), 12T.

Bei den Polyamiden A1_2 sind die Copolyamide 6T/6I, 10I/10T, MXD6/MXDI sowie die Homopolyamide MACM12 und MXD6 bevorzugt. Hinsichtlich der Copolyamide 6T/6I sind zwei verschiedene Zusammensetzungsbereiche besonders bevorzugt. Zum einen sind dies die amorphen Copolyamide mit einem Anteil von weniger als 50 Mol-% 6T-Einheiten, wobei ein Zusammensetzungsbereich 6T:6I von 20:80 bis 45:55 bevorzugt wird, und zum anderen sind dies die hochschmelzenden Copolymamide mit einem 6T-Anteil von grösser als 50 mol-%, wobei ein Zusammensetzungsbereich 6T:6I von 55:45 bis 80:20, insbesondere von 65:35 bis 75:25 bevorzugt wird. Im Hinblick auf die Copolyamide MXD6/MXDI werden MXD6 reiche Zusammensetzungen bevorzugt, insbesondere mit einem MXD6-Gehalt von grösser als 80 mol-%, besonders bevorzugt im Bereich von 82 bis 95 mol-%.

Bezüglich einer Polymermischung enthaltend die Polyamidkomponenten A1_1 und A1_2, A1_1 und A1_3, A1_2 und A1_3 sowie A1_1, A1_2 und A1_3 werden folgende Zusammensetzungen bevorzugt:
- (A1_1):: PA 66
- (A1_2):: PA 6I/6T, wobei das Mol-Verhältnis im Bereich von 65:35 bis 75:25 liegt oder insbesondere 67:33 beträgt.
- (A1_1):: PA 610 und/oder PA1010, wobei im Falle einer Mischung die Komponenten im Verhältnis von 1:1 bis 4:1 eingesetzt werden.
- (A1_2):: PA 6I/6T, wobei das Mol-Verhältnis im Bereich von 65:35 bis 75:25 liegt oder insbesondere 67:33 beträgt.
- (A1_1):: Mischung aus PA 6 und PA66, im Verhältnis von 1:2 bis 1:4, insbesondere von 1:4
- (A1_2):: PA 6I/6T, wobei das Mol-Verhältnis im Bereich von 65:35 bis 75:25 liegt oder insbesondere 67:33 beträgt.
- (A1_1):: PA 66
- (A1_2):: PA 6T/6I, wobei das Mol-Verhältnis im Bereich von 60:40 bis 75:25 liegt oder insbesondere 70:30 beträgt.
- (A1_1):: PA 66
- (A1_2):: PA 6T/66, wobei das Mol-Verhältnis im Bereich von 50:50 bis 70:30 liegt oder insbesondere 55:45 beträgt.
- (A1_1):: PA 66
- (A1_2):: MXD6, MXD10 oder PA MXD6/MXDI, wobei im Copolyamid das Mol-Verhältnis im Bereich von 70:30 bis 90:10 liegt oder insbesondere 88:12 beträgt.
- (A1_1):: PA 12
- (A1_3):: PA MACM12.
- (A1_1):: PA 12
- (A1_3):: PA MACMI/12, wobei der Gehalt an Laurinlactam im Bereich von 15 bis 45 mol-%, bevorzugt kleiner als 40 mol-%, insbesondere im Bereich von 20 bis 35 mol-% liegt.

Dabei liegt bevorzugtermassen der Anteil der Komponente (A1_1) jeweils im Bereich von 50 bis 90 Gew.-%, insbesondere von 60 bis 85 Gew.-% und Komponente (A1_2) und/oder (A1_3) bevorzugt im Bereich von 10 bis 50 Gew.-%, insbesondere im Bereich von 15 bis 40 Gew.-%.

In einer besonderen Ausführungsform werden folgende Zusammensetzungen für die Polymermischung (Polyamidmatrix) bevorzugt:
- (A1_1):: 50-100 Gew.-% PA 1010 oder PA 1012 oder PA 11 oder PA 12
- (A1_3):: 0-50 Gew.-% PA MACM12 oder PA MACMI/12 oder PA PACM12/MACM12,
- (A1_1):: 55-85 Gew.-% PA 610 oder PA 612 oder PA 1010 oder PA 1012 oder PA 1210 oder PA1212
- (A1_2):: 15-45 Gew.-% PA 6T/6I oder PA 10T/10I, wobei der 6I- bzw. 10I-Anteil 55 - 80 mol-%, bevorzugt 60-75 mol-% beträgt.
- (A1_1):: 70-100 Gew.-% Mischung aus PA 6 und PA66, im Verhältnis von 1:2 bis 1:4, insbesondere von 1:4
- (A1_2):: 0-30 Gew.-% PA 6I/6T, wobei das Mol-Verhältnis im Bereich von 65:35 bis 75:25 liegt oder insbesondere 67:33 beträgt,

In einer weiteren Ausführungsform weist die Komponente A1_2 eine Glasübergangstemperatur von grösser 90°C, bevorzugt grösser 110°C und besonders bevorzugt grösser 140°C auf.

Insbesondere bevorzugt ist folgende Ausführungsform:
(A1_1): 55-85 Gew.-% PA 610 oder PA 612oder PA 1010 oder PA 1012 oder PA 1210 oder PA1212
(A1_2): 15-45 Gew.-% PA 6T/6I oder PA 10T/10I, wobei der 6I- bzw. 101-Anteil 55 - 80 mol-%, bevorzugt 60-75 mol-% beträgt.

Bevorzugt können auch teilaromatische, teilkristalline Polyamid-Systeme als Komponente (A1) eingesetzt werden.

Weiterhin bevorzugt geht es um Formmassen, die fürs Reflow-Löten geeignet sind, also kurzzeitige Temperaturbelastungen von 260-270°C ohne Verzug und Blistering überstehen können.

Gemäss einer bevorzugten Ausführungsform ist die Komponente (A1), die dann bevorzugt die Gesamtheit von (A) ausmacht, aufgebaut aus PA 10T/6TCopolyamid, wobei dieses aufgebaut ist aus:
(AA) 40 bis 95 Mol-%, bevorzugt 60 bis 95 Mol-% 10T-Einheiten, gebildet aus den Monomeren 1,10-Decandiamin und Terephthalsäure;
(BB) 5 bis 60 Mol-%, bevorzugt 5 bis 40 Mol-% 6T-Einheiten, gebildet aus den Monomeren 1,6-Hexandiamin und Terephthalsäure.

Dabei können bis zu 30% der Monomeren innerhalb der so aufgebauten Komponente (A1) ersetzt werden, das heisst, das obige gilt einerseits mit der Massgabe, dass in der Komponente (A1) unabhängig voneinander in (AA) und/oder (BB) bis zu 30 Mol-%, bezogen auf die Gesamtmenge der Dicarbonsäuren, der Terephthalsäure ersetzt sein können durch andere aromatische, aliphatische oder cycloaliphatische Dicarbonsäuren mit 6 bis 36 Kohlenstoffatomen. Des weiteren gilt das obige andererseits mit der Massgabe, dass in der Komponente (A1) unabhängig voneinander in (AA) und/oder (BB) bis zu 30 Mol-% von 1,10-Decandiamin respektive 1,6-Hexandiamin, bezogen auf die Gesamtmenge der Diamine, ersetzt sein können durch andere Diamine mit 4 bis 36 Kohlenstoffatomen. Zu guter letzt gilt das obige weiter mit der Massgabe, dass nicht mehr als 30 Mol-% in der Komponente (A1), bezogen auf die Gesamtmenge der Monomeren, durch Lactame oder Aminosäuren gebildet sein können. Es ist aber bevorzugt, wenn diese Ersetzung der Monomeren innerhalb der Komponente (A1) entsprechend den obigen Massgaben weniger als 20% ausmacht, bevorzugt weniger als 10%, und insbesondere bevorzugt findet überhaupt keine derartige Ersetzung Anwendung. Insgesamt gilt also als weitere Massgabe, dass die Summe der Monomere, die Terephthalsäure, 1,6-Hexandiamin und 1,10-Decandiamin ersetzen (d.h. der Gesamt-Anteil an anderen aromatischen, aliphatischen oder cycloaliphatischen Dicarbonsäuren mit 6 bis 36 Kohlenstoffatomen, an anderen Diaminen mit 4 bis 36 Kohlenstoffatomen, und an Lactamen oder Aminosäuren) eine Konzentration von 30 Mol-%, bevorzugt 20 Mol-%, insbesondere 10 Mol-% in Bezug auf die Gesamtmenge der in Komponente A eingesetzten Monomere nicht überschreitet.

Gemäss einer bevorzugten Ausführungsform ist die Komponente (A1), die dann bevorzugt die Gesamtheit von (A) ausmacht, aufgebaut aus Polyamid 10T/10I/6T/6I, namentlich einem teilaromatischen, teilkristallinen Copolyamids aufgebaut aus
100 Gew.-% Disäureanteil zusammengesetzt aus:
72.0-98.3 Gew.-% Terephthalsäure (TPS);
28.0-1.7 Gew.-% Isophthalsäure (IPS)
und 100 Gew.-% Diaminanteil zusammengesetzt aus:
51.0-80.0 Gew.-% 1,6-Hexandiamin (HMDA);
20.0-49.0 Gew.-% C9-C12 Diamin;
wobei es sich beim C9-C12 Diamin um ein Diamin ausgewählt aus der Gruppe: 1,9-Nonandiamin, Methyl-1,8-Octandiamin, 1,10-Decandiamin, 1,11-Undecandiamin, 1,12-Dodecandiamin, oder eine Mischung derartiger Diaminen handelt, wobei 1,10-Decandiamin und 1,12-Dodecandiamin bevorzugt sind, und besonders 1,10-Decandiamin allein bevorzugt ist. Damit ist also ein Polyamidsystem PA 10T/10I/6T/6I bevorzugt, wobei obige Konzentrationen gelten.

Gemäss einer bevorzugten Ausführungsform ist die Komponente (A1), die dann bevorzugt die Gesamtheit von (A) ausmacht, aufgebaut aus Polyamid PA 6T/6I/6, namentlich einem teilaromatischen, teilkristallinen Copolyamid aufgebaut aus Terephthalsäure (TPS), Isophthalsäure (IPS), 1,6-Hexandiamin (HMDA) und Caprolactam (CLM) bzw. Aminocapronsäure, wobei das Copolymid 6T/6I/6 die Zusammensetzung 60-80/15-25/5-15 Gew.-%, besonders bevorzugt 65-75/17.5-22.5/7.5-12.5 Gew.-% besitzt.

Zusammenfassend lässt sich festhalten, dass es sich bevorzugtermassen bei der Komponente (A1) um ein Homo-Polyamid und/oder Copolyamid aufgebaut aus aliphatischen, cycloaliphatischen und/oder oder aromatischen Monomeren handelt, bevorzugt um eine Mischung aus einem teilkristallinen, aliphatischen Polyamid (A1_1) und/oder einem teilaromatischen Polyamid (A1_2), und/oder einem amorphen Polyamid (A1_3), wobei bevorzugtermassen die Polyamide der Komponente (A1) ausgewählt sind aus folgender Gruppe: Polyamid 46, Polyamid 6, Polyamid 66, Polyamid 11, Polyamid 12, Polyamid 1212, Polyamid 1010, Polyamid 1012, Polyamid 1112, Polyamid 610, Polyamid 612, Polyamid 69, Polyamid 810, MACM9, MACM10, MACM11, MACM12, MACM13, MACM14, MACM16, MACM18, PACM9, PACM10, PACM11, PACM12, PACM13, PACM14, PACM16, PACM18 oder Copolyamide, wie z.B. MACMI/12, MACMT/12, 6I/6T/MACMI/MACMT/12, 3-6T, 6I/MACMI/MACMT, 6I/PACMI/PACMT, 6I/6T/MACMI, MACMI/MACM36, 12/PACMI, 12/MACMT, 6/PACMT, 6/IPDT, MACM10/PACM10, MACM12/PACM12, MXD6, MXD10, MXDI/MXD6, 6T/6I, 6T/66, 6T/10T, 6T/12, 11/10T, 12/10T, 10T/1010, 10I/10T, 10T/1012, 9MT, 12T, sowie Mischungen respektive Blends davon.

Natürlich können die erfindungsgemäßen thermoplastischen Polyamidformmassen weiterhin übliche und dem Fachmann allgemein bekannte Zusatzstoffe in Form der Komponente (D) enthalten, die aus der Gruppe bestehend aus Haftvermittlern, halogenhaltigen Flammschutzmitteln, halogenfreien Flammschutzmitteln, Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, insbesondere auf Basis von Kupferhalogeniden und Alkalihalogeniden, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fliesshilfsmitteln, Gleitmitteln, Entformungsmitteln, Weichmachern, Pigmenten, Farbstoffen, Markierungsstoffen und Mischungen hiervon ausgewählt sind. Konkret ist damit bevorzugtermassen die Komponente (D) ausgewählt aus der Gruppe bestehend aus: bestehend aus Haftvermittler, Flammschutzmittel, insbesondere halogenhaltige oder halogenfreie Flammschutzmittel, Stabilisatoren, Alterungsschutzmittel, Antioxidantien, Antiozonantien, Lichtschutzmittel, UV-Stabilisatoren, UV-Absorber, UV-Blocker, anorganische Hitzestabilisatoren, insbesondere auf Basis von Kupferhalogeniden und/oder Alkalihalogeniden, organische Hitzestabilisatoren, Leitfähigkeitsadditive, Russ, optische Aufheller, Verarbeitungshilfsmittel, Nukleierungsmittel, Kristallisationsbeschleuniger, Kristallisationsverzögerer, Fliesshilfsmittel, Gleitmittel, Entformungsmittel, Weichmacher, organische Pigmente und Farbstoffe, Markierungsstoffe und Mischungen hiervon.

Des weiteren betrifft die vorliegende Erfindung ein Bauteil, insbesondere Bauteil mit elektrischen Leiterbahnen, auf Basis einer Formmasse nach einem der vorhergehenden Ansprüche.

Weitere Ausführungsformen sind in den abhängigen Ansprüchen angegeben.

### BESCHREIBUNG BEVORZUGTER AUSFÜHRUNGSFORMEN

Die Erfindung soll nachfolgend unter Verwendung von spezifischen Ausführungsbeispielen (B) beschrieben und mit den weniger leistungsfähigen Systemen nach dem Stand der Technik (VB) verglichen werden. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

### Beispiele B1 bis B6 und Vergleichsbeispiele VB1 bis VB6:

Die in den Tabellen 1 bis 4 angegebenen Komponenten werden in einem zweiwelligen Extruder der Firma Werner und Pfleiderer mit einem Schneckendurchmesser von 25 mm bei vorgegebenen Prozessparametern (siehe Tabelle 1) compoundiert, wobei die Polyamidgranulate sowie die Zusatzstoffe in die Einzugszone dosiert werden, während die Glasfaser über einen Sidefeeder 3 Gehäuseeinheiten vor der Düse in die Polymerschmelze dosiert wird. Die Compounds zusammengefasst in Tabelle 2, 3 und 4 wurden als Strang aus einer Düse mit 3 mm Durchmesser abgezogen und nach Wasserkühlung granuliert. Das Granulat wird 24 Stunden bei 110°C im Vakuum von 30 mbar getrocknet. Bei den Formmassen aus Tabelle 5 erfolgte die Granulierung mittels einer Unterwassergranulierung bzw. Heißabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 120°C für 24h wurden die Granulateigenschaften gemessen und die Prüfkörper hergestellt.

**Tabelle 1: Compoundier- und Spritzgussbedingungen für die Beispiele und Vergleichsbeispiele**

| **Compoundier-/Verarbeitungsparameter** | | Bedingungen für Beispiele in Tabelle Nr. | | | |
|---|---|---|---|---|---|
| | | **2** | **3** | **4** | **5** |
| Compoundierung | Zylindertemperaturen | 260 | 270 | 250 | 340 |
| | Schneckendrehzahl | 200 | 200 | 150 | 150 |
| | Durchsatz | 10 | 10 | 8 | 8 |
| Spritzguss | Zylindertemperaturen | 260 | 260 | 240 | 340 |
| | Werkzeugtemperatur | 40 | 40 | 80 | 140 |
| | Schneckenumfangsgeschwindigkeit | 15 | 15 | 15 | 15 |

### Verarbeitung:

Die Compounds werden mit einer Spritzgussmaschine Arburg Allrounder 320-210-750 zu Probekörpern bei definierten Zylindertemperaturen der Zonen 1 bis 4 und einer definierten Werkzeugtemperatur (siehe Tabelle 1) verspritzt.

**Tabelle 2: Zusammensetzung und mechanische Eigenschaften von Beispiel B1 und Vergleichsbeispielen VB1-1 bis VB1-5**

| | Einheit | **B1** | **VB1**-**1** | **VB1-2** | **VB1-3** | **VB1-4** | **VB1-5** |
|---|---|---|---|---|---|---|---|
| ***Zusammensetzung*** | | | | | | | |
| PA1010 | Gew.-% | 36.6 | 36.6 | 36.6 | 36.6 | 36.6 | 36.6 |
| PA 6I/6T (70:30) | Gew.-% | 9.1 | 9.1 | 9.1 | 9.1 | 9.1 | 9.1 |
| Glasfaser E10 | Gew.-% | | | 50.0 | | | 54.0 |
| Glasfaser S10 | Gew.-% | 50.0 | | | 54.0 | | |
| Glasfaser E7x28 | Gew.-% | | 50 | | | 54 | |
| Kupferchromit | Gew.-% | 4.0 | 4.0 | 4.0 | 0 | 0 | 0 |
| Irganox 1098 | Gew.-% | 0.3 | 0.3 | 0.3 | 0.3 | 0.3 | 0.3 |

| ***Eigenschaften*** | | | | | | | |
|---|---|---|---|---|---|---|---|
| Zug-E-Modul | MPa | 15300 | 12900 | 11500 | 17300 | 15500 | 14300 |
| Reissfestigkeit | MPa | 167 | 139 | 135 | 205 | 207 | 203 |
| Reissdehnung | % | 2.5 | 2.0 | 2.1 | 3.4 | 2.9 | 3.5 |
| Schlagzähigkeit 23°C | kJ/m² | 59 | 50 | 44 | 74 | 93 | 78 |
| Kerbschlagzähigkeit 23°C | kJ/m² | 11 | 9 | 8 | 14 | 20 | 14 |

**Tabelle 3: Zusammensetzung und mechanische Eigenschaften von Beispiel B2 und Vergleichsbeispielen VB2-1 bis VB2-5.**

| | Einheit | **B2** | **VB2-1** | **VB2-2** | **VB2-3** | **VB2-4** | **VB2-5** |
|---|---|---|---|---|---|---|---|
| ***Zusammensetzung*** | | | | | | | |
| PA 12 | Gew.-% | 45.7 | 45.7 | 45.7 | 49.7 | 49.7 | 49.7 |
| Glasfaser E10 | Gew.-% | | | 50.0 | | | 50.0 |
| Glasfaser S10 | Gew.-% | 50.0 | | | 50.0 | | |
| Glasfaser E7x28 | Gew.-% | | 50 | | | 50 | |
| Kupferchromit | Gew.-% | 4.0 | 4.0 | 4.0 | 0 | 0 | 0 |
| Irganox 1098 | Gew.-% | 0.3 | 0.3 | 0.3 | 0.3 | 0.3 | 0.3 |

| ***Eigenschaften*** | | | | | | | |
|---|---|---|---|---|---|---|---|
| Zug-E-Modul | MPa | 12900 | 12400 | 11100 | 13500 | 13200 | 12000 |
| Reissfestigkeit | MPa | 152 | 119 | 115 | 165 | 180 | 160 |
| Reissdehnung | % | 3.3 | 2.6 | 2.8 | 5.5 | 3.3 | 5.3 |
| Schlagzähigkeit 23°C | kJ/m² | 65 | 55 | 48 | 78 | 98 | 73 |
| Kerbschlagzähigkeit 23°C | kJ/m² | 18 | 16 | 12 | 24 | 29 | 23 |

**Tabelle 4: Zusammensetzung und mechanische Eigenschaften der Beispiele B3 und B4 sowie der Vergleichsbeispiele VB3-1 bis VB3-3 und VB4.**

| | Einheit | **B3** | **B4** | **VB3-1** | **VB4** | **VB3-2** | **VB3-3** |
|---|---|---|---|---|---|---|---|
| ***Zusammensetzung*** | | | | | | | |
| PA MACM12 | Gew.-% | 31.3 | 32.6 | 31.3 | 32.6 | 34.7 | 34.7 |
| PA 12 | Gew.-% | 13.5 | 14 | 13.5 | 14 | 15 | 15 |
| Glasfaser E10 | Gew.-% | | | 45 | 47 | | 50 |
| Glasfaser S10 | Gew.-% | 45 | 47 | | | 50 | |
| Zinksulfid | Gew.-% | 9.9 | 6.1 | 9.9 | 6.1 | 0 | 0 |
| Irganox 1098 | Gew.-% | 0.3 | 0.3 | 0.3 | 0.3 | 0.3 | 0.3 |

| ***Eigenschaften*** | | | | | | | |
|---|---|---|---|---|---|---|---|
| Zug-E-Modul | MPa | 15600 | 14800 | 13400 | 12900 | 13800 | 12000 |
| Reissfestigkeit | MPa | 177 | 174 | 159 | 158 | 176 | 167 |
| Reissdehnung | % | 2.3 | 2.5 | 2.4 | 2.5 | 2.7 | 3.1 |
| Schlagzähigkeit 23°C | kJ/m² | 52 | 55 | 48 | 52 | 68 | 74 |
| Kerbschlagzähigkeit 23°C | kJ/m² | 15 | 16 | 14 | 15 | 18 | 20 |

**Tabelle 5: Zusammensetzung und mechanische Eigenschaften der Beispiele B5 und B6 sowie der Vergleichsbeispiele VB5 und VB6.**

| | Einheit | **B5** | **VB5** | **B6** | **VB6** |
|---|---|---|---|---|---|
| ***Zusammensetzung*** | | | | | |
| PA 6T/6I (70:30) | Gew.-% | 59.2 | 59.2 | 49.2 | 49.2 |
| Glasfaser E10 | Gew.-% | 0 | 20.0 | | 12.5 |
| Glasfaser S10 | Gew.-% | 20.0 | 0 | 12.5 | 0 |
| Titandioxid | Gew.-% | 20.0 | 20.0 | 20.0 | 20.0 |
| Calciumcarbonat | Gew.-% | 0 | 0 | 17.5 | 17.5 |
| Irganox 1098 | Gew.-% | 0.3 | 0.3 | 0.3 | 0.3 |
| Licowax S | Gew.-% | 0.5 | 0.5 | 0.5 | 0.5 |

| ***Eigenschaften*** | | | | | |
|---|---|---|---|---|---|
| Zug-E-Modul | MPa | 11200 | 10300 | 10800 | 9300 |
| Reissfestigkeit | MPa | 148 | 124 | 97 | 82 |
| Reissdehnung | % | 1.7 | 1.4 | 1.3 | 1.0 |
| Schlagzähigkeit 23°C | kJ/m² | 36 | 25 | 25 | 20 |
| Kerbschlagzähigkeit 23°C | kJ/m² | 4.8 | 4.0 | 4.1 | 3.2 |

### Legende:

- PA 6T/6I (70:30): Teilkristallines, teilaromatisches Polyamid auf Basis von Terephthalsäure, Isophthalsäure und 1,6-Hexandiamin, mit einem Schmelzpunkt von 325°C und einer Lösungsviskosität von 1.58.
- PA 6T/6I (30:70): Amorphes, teilaromatische Polyamid auf Basis von Terephthalsäure, Isophthalsäure und 1,6-Hexandiamin, mit einem Glasübergangstemperatur von 125°C und einer Lösungsviskosität von 1.54.
- PA 1010: Teilkristallines, aliphatisches Polyamid auf Basis von 1,10-Decandiamin und Sebacinsäure, mit einem Schmelzpunkt von 200°C und einer Lösungsviskosität von 1.78.
- PA 12: Teilkristallines, aliphatisches Polyamid auf Basis von Laurinlactam, mit einem Schmelzpunkt von 178°C und einer Lösungsviskosität von 1.96.
- PA MACM12: Amorphes Polyamid auf Basis Bis-(4-amino-3-methyl-cyclohexyl)-methan und Dodecandisäure, mit einem Glasübergangstemperatur von 156°C und einer Lösungsviskosität von 1.82.
- Glasfaser E10: Schnittglasfasern Vetrotex 995 aus E-Glas, mit einer Länge von 4.5 mm und einem Durchmesser von 10 µm (kreisförmiger Querschnitt) von Owens Corning Fiberglas.
- Glasfaser F7x28: Schnittglasfasern CSG3PA-820 aus E-Glas, mit einer Länge von 3 mm, einer Hauptquerschnittsachse von 28 µm, einer Nebenquerschnittsachse von 7 µm und einem Achsenverhältnis von 4 (nicht-kreisförmiger Querschnitt) von NITTO BOSEKI, Japan.
- Glasfaser S10: Schnittglasfasern Vetrotex 995 aus S-Glas, mit einer Länge von 4.5 mm und einem Durchmesser von 10 µm (kreisförmiger Querschnitt) von Owens Corning Fiberglas.
- Kupferchromit: Shepherd Schwarz 30C965 (The Shepherd Color Company), Kupferchromoxid (CuCr₂O₄), mittlere Partikelgrösse (d50) im Bereich von 0.6 µm.
- Zinksulfid: Sachtolith HD-S (Sachtleben), mittlere Partikelgrösse im Bereich von 0.30 bis 0.35 µm.
- Titandioxid: Ti-Pure R-104 (DuPont), mittlere Partikelgrösse im Bereich von 0.22 µm.
- Calciumcarbonat: Socal P3 (Solvay), mittlere Partikelgrösse im Bereich von 0.18 - 0.50 µm.

Entgegen den Erwartungen resultieren aus den Vergleichsversuchen VB1-3 bis VB1-5 keine Vorteile der S-Glasfaser im Vergleich zur runden oder flachen E-Glasfaser. Die für die Formmassen erzielten Werte für Reissfestigkeit, Reissdehnung und Schlagzähigkeit sprechen gegen die Wahl der S-Glasfaser. Die runde E-Glasfaser ist bis auf den Zug-E-Modul nahezu gleichwertig, die flache E-Glasfaser in der Reissfestigkeit und der Schlagzähigkeit deutlich überlegen.

Setzt man nun diesen Formmassen aber einen partikulären Füllstoff, wie z.B. das Kupferchromit (CuCr₂O₄) z.B. in einer Konzentration von 4% zu, so verschlechtern sich die mechanischen Eigenschaften aller betrachteten Formmassen zum Teil dramatisch. Allerdings fallen die mechanischen Eigenschaften der mit der S-Glasfaser verstärkten Formmasse (B1) deutlich weniger stark ab als diejenigen der auf E-Glas basierten Formmassen (VB1-1 und VB1-2).

Ähnlich verhalten sich die Formmassen, welche auf Polyamid 12 beruhen und in Tabelle 2 zusammengefasst sind. Auch hier zeigt die füllstofffreie, S-Glas verstärkte Formmasse (VB2-3) kaum Vorteile hinsichtlich der mechanischen Eigenschaften gegenüber der preisgünstigen E-Glasfaser (VB-2-5), und sogar Nachteile gegenüber der flachen E-Glasfaser (VB2-4). Erst beim Zusatz von Kupferchromit (CuCr₂O₄) werden die Vorteile der S-Glasfaser sichtbar, nämlich deutlich verbesserte Reissfestigkeit, höhere Reissdehung und Schlagzähigkeit.

Auch bei einer überwiegend amorphen Matrix, wie in den Beispielen B3, B4, VB3-1 bis VB3-3 und VB4, ergeben sich in etwa die gleichen Verhältnisse wie eben geschildert. Für die erfindungsgemässe Formmasse resultiert eine deutlich höhere Reissfestigkeit und verbesserte Schlagzähigkeit bei deutlich höherer Steifigkeit. Die unpigmentierten Formmassen auf Basis von PA MACM12 oder einer Mischung von PA MACM12 mit PA12 zeigen auch bei hohen Gehalten an S-Glasfasern eine überraschend gute Transparenz. So weist ein mit 50 Gew.-% S-Glas verstärktes PA MACM12 eine Lichttransmission bestimmt nach der Methode ASTM D1003 (Lichtart CIE-C) von 80% auf. Die Messung der Lichttransmission wurde dabei in den unten angeführten Experimenten auf einem Gerät mit dem Namen Haze Guard Plus der Firma BYK Gardner (DE) an Rundplatten 70x2 mm durchgeführt.

Die Messungen wurden nach folgenden Normen und an folgenden Prüfkörpern durchgeführt:
Zug-E-Modul:
   ISO 527 mit einer Zuggeschwindigkeit von 1 mm/min
   ISO-Zugstab, Norm: ISO/CD 3167, Typ A1, 170 x 20/10 x 4 mm, Temperatur 23°C Reissfestigkeit, Reissdehung:
      ISO 527 mit einer Zuggeschwindigkeit von 5 mm/min
      ISO-Zugstab, Norm: ISO/CD 3167, Typ A1, 170 x 20/10 x 4 mm, Temperatur 23°C
Schlagzähigkeit, Kerbschlagzähigkeit nach Charpy:
   ISO 179
   ISO-Prüfstab, Norm: ISO/CD 3167, Typ B1, 80x10x4 mm bei Temperatur 23 °C
Schmelzpunkt (Tm), Schmelzenthalpie (ΔHm) und Glasumwandlungstemperatur (Tg):
   ISO-Norm 11357-11-2
   Granulat
   Die Differential Scanning Calorimetry (DSC) wurde mit Aufheizrate von 20 °C/min durchgeführt. Für die Glasumwandlungstemperatur (Tg) wird die Temperatur für den Onset angegeben.
Relative Viskosität:
   DIN EN ISO 307, in 0,5 Gew.-%-iger m-Kresollösung, Temperatur 20°C Granulat

## Patentansprüche

1. Thermoplastische Formmasse bestehend aus:
(A) 20 - 88 Gew.-% thermoplastischem Kunststoff;
(B) 10 - 70 Gew.-% faserförmigen Zuschlagstoffen, aufgebaut aus
(B1) 10 - 70 Gew.-% Glasfasern, die im Wesentlichen aus den Komponenten Siliciumdioxid, Aluminiumoxid und Magnesiumoxid aufgebaut sind und welche einen Gehalt an Magnesiumoxid von wenigstens 5 Gew.-% und einen Gehalt an Calciumoxid von höchstens 10 Gew.-% aufweisen, oder Mischungen davon;
(B2) 0 - 20 Gew.-% von den Glasfasern der Komponente (B1) verschiedene Glasfasern;
(B3) 0 - 20 Gew.-% weitere, von den Fasern der Komponenten (B1) und (B2) verschiedene faserförmige, nicht auf Glas basierende Zuschlagstoffe ausgewählt aus der Gruppe: Kohlenstoffasern, Graphitfasern, Aramidfasern, Nanotubes;
(C) 2 - 40 Gew.-% partikulärer Füllstoff;
(D) 0 - 2 Gew.-% Additive;
wobei die Summe aus A - D 100 Gew.-% ausmacht.

2. Formmasse nach Anspruch 1, **dadurch gekennzeichnet, dass** die Komponente (A) aus Polyamid (A1) oder einer Mischung von Polyamiden besteht, mit der Massgabe, dass bis zu 40%, vorzugsweise bis zu 20%, bis zu 10% oder bis zu 5%, davon ersetzt sein können durch einen thermoplastischen Kunststoff (A2) nicht auf Polyamidbasis, wobei vorzugsweise im wesentlichen kein solcher thermoplastischen Kunststoff (A2) nicht auf Polyamidbasis enthalten ist..

3. Formmasse nach Anspruch 2, **dadurch gekennzeichnet, dass** der Anteil an Komponente (A) im Bereich von 25-82 Gew.-% liegt, vorzugsweise im Bereich von 30-77 Gew.-%.

4. Formmasse nach einem der vorhergehenden Ansprüche 2-3, **dadurch gekennzeichnet, dass** der Anteil an Komponente (B1) im Bereich von 15-60 Gew.-% liegt, vorzugsweise im Bereich von 20-55 Gew.-%.

5. Formmasse nach einem der vorhergehenden Ansprüche 2-4, **dadurch gekennzeichnet, dass** der Anteil an Komponente (C) im Bereich von 3-25 Gew.-% liegt, vorzugsweise im Bereich von 3-15 Gew.-%.

6. Formmasse nach einem der vorhergehenden Ansprüche, **dadurch gekennzeichnet, dass** die Komponente (A)ausgewählt ist aus der Gruppe bestehend aus: Polyamid, Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon, insbesondere des Typs PSU, PESU, PPSU, Polyphenylenether, Polyphenylensulfid, Polyphenylenoxid, flüssigkristalline Polymere, Polyetherketon, Polyetheretherketon, Polyimid, Polyamidimid, Polyesterimid, Polyetheramid, Polyesteramid, Polyetheresteramid, Polyurethan, insbesondere des Typs TPU, PUR, Polysiloxan, Polyacrylat, Polymethacrylat sowie Mischungen oder Copolymere auf Basis solcher Systeme, weiterhin bevorzugt in Kombination mit einem oder mehreren Schlagzähmodifikatoren,
und/oder das der Anteil an Komponente (B2), vorzugsweise ausgewählt aus der Gruppe bestehend aus E-Glasfasern, A-Glasfasern, C-Glasfasern, D-Glasfasern Basaltfasern, sowie Mischungen davon, jeweils mit kreisförmiger oder nicht-kreisförmiger Querschnittsfläche, im Bereich von 0-10 Gew.-% liegt, vorzugsweise im Bereich von 0-5 Gew.-%, wobei insbesondere vorzugsweise ausschliesslich Komponente (B1) vorhanden ist.

7. Formmasse nach einem der vorhergehenden Ansprüche, **dadurch gekennzeichnet, dass** die Glasfasern der Komponente (B1) hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid sind, wobei sie bevorzugtermassen die folgende Zusammensetzung aufweisen: 58-70 Gew.-%, bevorzugt 60-67 Gew.-% Siliciumdioxid (SiO₂), 15-30 Gew.-%, bevorzugt 20-28 Gew.-% Aluminiumoxid (Al₂O₃), 5-15 Gew.-%, bevorzugt 7-12 Gew.-% Magnesiumoxid (MgO), 0-10 Gew.-%, bevorzugt 0-9 Gew.-% Calciumoxid (CaO) und 0-2 Gew.-%, bevorzugt 0-1.5 Gew.-% weitere Oxide, wie insbesondere Zirkoniumdioxid (ZrO₂), Boroxid (B₂O₃), Titandioxid (TiO₂) oder Lithiumoxid (Li₂O) oder eine Kombination dieser Oxide.

8. Formmasse nach Anspruch 7, **dadurch gekennzeichnet, dass** die Glasfasern der Komponente (B1) hochfeste Glasfasern mit der folgenden Zusammensetzung sind: 62-66 Gew.-% Siliciumdioxid (SiO₂), 22-27 Gew.-% Aluminiumoxid (Al₂O₃), 8-12 Gew.-% Magnesiumoxid (MgO), 0- 5Gew.-% Calciumoxid (CaO), 0-1 Gew.-% weitere Oxide, wie insbesondere Zirkoniumdioxid (ZrO₂), Boroxid (B₂O₃), Titandioxid (TiO₂), Lithiumoxid (Li₂O) oder eine Kombination dieser Oxide.

9. Formmasse nach einem der vorhergehenden Ansprüche, **dadurch gekennzeichnet, dass** die Glasfasern der Komponente (B1) eine Zugfestigkeit von wenigstens 3700 MPa, vorzugsweise von wenigstens 3800 MPa, insbesondere bevorzugt von wenigstens 4000 MPa aufweisen, sowie eine Reissdehnung von wenigstens 4.8 %, vorzugsweise wenigstens 4.9 %, vorzugsweise von wenigstens 5.0 % und einen Zug-E-Modul von 75-90 GPa, vorzugsweise mehr als 78 GPa, vorzugsweise von mehr als 80 GPa aufweisen.

10. Formmasse nach einem der vorhergehenden Ansprüche, **dadurch gekennzeichnet, dass** die Glasfasern der Komponente (B1) und/oder (B2) in Form von Kurzfasern, bevorzugt in Form von Schnittglas mit einer Länge im Bereich von 0.2-20 mm, oder in Form von oder Endlosfasern vorliegen.

11. Formmasse nach einem der vorhergehenden Ansprüche, **dadurch gekennzeichnet, dass** es sich bei Komponente (C) um partikuläre Füllstoffe handelt ausgewählt aus der Gruppe bestehend aus: Talk, Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie insbesondere Bariumsulfat, Zinkoxid, Zinksulfid, Titandioxid, Eisenoxid, Eisenmanganoxid, Metalloxide, dabei insbesondere Spinelle, wie insbesondere Kupfereisenspinell, Magnesiumaluminiumoxid, Kupfer-Chrom-Mangan-Mischoxide, Kupfer-Mangan-Eisen-Mischoxide, Kupferchromoxid, Zink-Eisenoxid, Kobalt-Chromoxid, Kobalt-Aluminiumoxid, Magnesiumaluminiumoxid, Rutil-Pigmente wie Titan-Zink-Rutil, Nickel-Antimon-Titanat, Chrom-Antimon-Titanat, permanentmagnetische oder magnetisierbare Metalle oder Legierungen, hohlkugelige Silikatfüllstoffe, Aluminiumoxid, Bornitrid, Borcarbid, Aluminiumnitrid, Calciumfluorid sowie Mischungen und/oder oberflächenbehandelte Formen hiervon.

12. Formmasse nach Anspruch 11, **dadurch gekennzeichnet, dass** die Komponente (C) Partikel mit einer mittleren Partikelgrösse (D₅₀) im Bereich von 0.1-40 µm, bevorzugt im Bereich von 0.2-20 µm, insbesondere im Bereich von 0.3-10 µm, und/oder ein Aspektverhältnis von höchstens 10, insbesondere von höchstens 5 aufweist oder im wesentlichen durch solche Partikel gebildet wird , und/oder die Komponente (C) einen von null verschiedenen Absorptionskoeffizienten für elektromagnetische, insbesondere UV-, VIS-oder IR-Strahlung, insbesondere für Laserstrahlung, aufweist, bevorzugtermassen mit einer Absorptionsfähigkeit im sichtbaren und/oder infraroten Strahlungsbereich mit einem Absorptionskoeffizienten von wenigstens 0.05, bevorzugt wenigstens 0.1, und insbesondere bevorzugt wenigstens 0.2.

13. Formmasse nach einem der vorhergehenden Ansprüche 2-12, **dadurch gekennzeichnet, dass** es sich bei Komponente (A1) um ein Homo-Polyamid und/oder Copolyamid aufgebaut aus aliphatischen, cycloaliphatischen und/oder oder aromatischen Monomeren handelt, bevorzugt um eine Mischung aus einem teilkristallinen, aliphatischen Polyamid (A1_1) und/oder einem teilaromatischen Polyamid (A1_2), und/oder einem amorphen Polyamid (A1_3), wobei bevorzugtermassen die Polyamide der Komponente (A1) ausgewählt sind aus folgender Gruppe: Polyamid 46, Polyamid 6, Polyamid 66, Polyamid 11, Polyamid 12, Polyamid 1212, Polyamid 1010, Polyamid 1012, Polyamid 1112, Polyamid 610, Polyamid 612, Polyamid 69, Polyamid 810, MACM9, MACM10, MACM11, MACM12, MACM13, MACM14, MACM16, MACM18, PACM9, PACM10, PACM11, PACM12, PACM13, PACM14, PACM16, PACM18 oder Copolyamide, wie z.B. MACMI/12, MACMT/12, 6I/6T/MACMI/MACMT/12, 3-6T, 6I/MACMI/MACMT, 6I/PACMI/PACMT, 6I/6T/MACMI, MACMI/MACM36, 12/PACMI, 12/MACMT, 6/PACMT, 6/IPDT, MACM10/PACM10, MACM12/PACM12, MXD6, MXD10, MXDI/MXD6, 6T/6I, 6T/66, 6T/10T, 6T/12, 11/10T, 12/10T, 10T/1010, 10T/1012, PA10T/6T, PA6T/10I/10T, PA6T/6I/6, PA10I/10T, 9MT, 12T, sowie Mischungen respektive Blends davon.

14. Formmasse nach einem der vorhergehenden Ansprüche, **dadurch gekennzeichnet, dass** die Komponente (A) oder die Komponente (A2) nach Anspruch 2 ausgewählt ist aus der Gruppe bestehend aus: Schlagzähmodifikatoren, bevorzugt MBS- und/oder Kern-Mantel-Schlagzähmodifikatoren, insbesondere auf Basis Methacrylat-Butadien-Styrol, SEBS-Copolymere, und/oder dass die Komponente (D) ausgewählt ist aus der Gruppe bestehend aus: Haftvermittler, Flammschutzmittel, insbesondere halogenhaltige oder halogenfreie Flammschutzmittel, Stabilisatoren, Alterungsschutzmittel, Antioxidantien, Antiozonantien, Lichtschutzmittel, UV-Stabilisatoren, UV-Absorber, UV-Blocker, anorganische Hitzestabilisatoren, insbesondere auf Basis von Kupferhalogeniden und/oder Alkalihalogeniden, organische Hitzestabilisatoren, Leitfähigkeitsadditive, Russ, optische Aufheller, Verarbeitungshilfsmittel, Nukleirungsmittel, Kristallisationsbeschleuniger, Kristallisationsverzögerer, Fliesshilfsmittel, Gleitmittel, Entformungsmittel, Weichmacher, Pigmente, Farbstoffe, Markierungsstoffe und Mischungen hiervon.

15. Bauteil, insbesondere Bauteil mit elektrischen Leiterbahnen, auf Basis einer Formmasse nach einem der vorhergehenden Ansprüche.

## Claims

1. Thermoplastic moulding compound consisting of:
(A) 20-88% by weight thermoplastic synthetic;
(B) 10-70% by weight fibre-shaped aggregates;
(B1) 10-70% by weight glass fibres that consist primarily of silicon dioxide, aluminium oxide, and magnesium oxide and which have a magnesium oxide content of at least 5% by weight and a content in calcium oxide of at most 10 % by weight, or mixtures thereof;
(B2) 0-20% by weight of glass fibres that differ from the fibres in components (B1);
(B3) 0-20% by weight of additional fibre-shaped aggregates that differ from the fibres in components (B1) and (B2), are not based on glass, and are selected from the following group: carbon fibres, graphite fibres, aramide fibres, nanotubes;
(C) 2 - 40% by weight particulate filler material;
(D) 0 - 2% by weight additives;
whereby the sum of (A) through (D) equals 100% weight.

2. Moulding compound according to claim 1, **characterized in that** the thermoplastic component (A) consists of polyamide (A1) or a mixture of polyamides, with the stipulation proviso that up to 40%, preferably up to 20%, 10% or 5%, can be replaced by a thermoplastic synthetic (A2) that is not polyamide-based, whereby it is preferred that no thermoplastic synthetic (A2) be polyamide-based.

3. Moulding compound according to Claim 2, **characterized in that** the proportion of component (A) should preferably be 25-82% by weight, particularly in a range of 30-77% by weight.

4. Moulding compound according to any of the preceding claims 2-3, **characterised in that** the proportion of component (B1) is 15-60% by weight, particularly in a range of 20-55% by weight.

5. Moulding compound according to any of the preceding claims 2-4, **characterised in that** the proportion of component (C) is 3-25% by weight, particularly in a range of 3-15% by weight.

6. Moulding compound according to any of the preceding claims, **characterised in that** component (A) is selected from the group consisting of: polyamide, polycarbonate, polystyrene, polymethyl methacrylate, acrylonitrile-butadiene-styrene copolymer, acrylonitrile-styrene copolymer, polyolefin, polyoxymethylene, polyester, especially polyethylene terephthalate, polybutylene terephthalate, polysulphone, especially of the type PSU, PESU, PPSU, polyphenylene ether, polyphenylsulphone, polyphenylene oxide, liquid crystalline polymers, polyether ketone, polyether ether ketone, polyimide, polyamide-imide, polyester imide, polyetheramide, polyesteramide, polyether ester amide, polyurethane, especially of the type TPU, PUR, polysiloxane, polyacrylate, polymethyl acrylate and compounds or copolymers based on such systems, further preferred with one or several impact resistance modifiers,
and/or **in that** the proportion of component (B2), preferably selected from the group consisting of E-glass fibres, A-glass fibres, C-glass fibres, D-glass fibres, basalt fibres, as well as compounds thereof, each with circular or non-circular transverse surface, is in the range of 0-10% by weight, preferably in the range of 0-5% by weight, whereby particular preference is given exclusively to component (B1).

7. A moulding compound according to any of the preceding claims, **characterised in that** the glass fibres of component (B1) are high-strength glass fibres based on the ternary system silicon dioxide-aluminium oxide-magnesium oxide or on the quaternary system silicon dioxide-aluminium oxide-magnesium oxide-calcium oxide, wherein they preferably have the following composition: 58-70%, preferably 60-67%, by weight silicon dioxide(SiO₂); 15- 30%, preferably 20-28%, by weight aluminium oxide (Al₂O₃); 5-15%, preferably 7-12%, by weight magnesium oxide (MgO); 0-10%, preferably 0-9%, by weight calcium oxide (CaO); and 0-2%, preferably 0-1.5%, by weight other oxides, especially zirconium dioxide (ZrO₂), boric oxide (B₂O₃), titanium dioxide (TiO₂), or lithium oxide (Li₂O), or a combination of these oxides.

8. Moulding compound according to Claim 7, **characterised in that** the glass fibres of component (B1) are high-strength glass fibres with the following composition: 62-66% by weight silicon dioxide (SiO₂), 22-27% by weight aluminium oxide (Al₂O₃), 8-12% by weight magnesium oxide (MgO), 0-5% by weight calcium oxide (CaO) and 0-1% by weight other oxides, such as zirconium dioxide (ZrO₂), boric oxide (B₂O₃), titanium dioxide (TiO₂), lithium oxide (Li₂O), or a combination of these oxides.

9. Moulding compound according to any of the preceding claims, **characterised in that** the glass fibres of component (B1) have a tensile strength of at least 3700 MPa, preferably at least 3800 MPa, ideally at least 4000 MPa, as well as an ultimate elongation of at least 4.8%, preferably at least 4.9%, preferably of at least 5.0%, and a tensile modulus of 75-90 GPa, preferably more than 78 GPa, preferably of more than 80 GPa.

10. Moulding compound according to any of the preceding claims, **characterised in that** the glass fibres of component (B1) and/or (B2) are present in the form of short fibres, preferably in the form of cut glass with a length of 0.2-20 mm, or in the form of rovings.

11. Moulding compound according to any of the preceding claims, **characterised in that** component (C) is a particulate filler material selected from the group consisting of: talc, mica, silicates, quartz, wollastonite, kaolin, silicic acids, magnesium carbonate, magnesium hydroxide, chalk, ground or cut calcium carbonate, lime, feldspar, anorganic pigments, such as especially barium sulphate, zinc oxide, zinc sulphide, titanium dioxide, ferric oxide, ferric manganese oxide, metal oxides, especially spinels, such as especially copper ferric spinel, magnesium aluminium oxide, copper-chromium-manganese-compound oxides, copper-manganese-iron-compound oxides, copper chromium oxide, zinc-ferric oxide, cobalt chromium oxide, cobalt-aluminium oxide, magnesium aluminium oxide, rutile pigments such as titanium-zinc-rutile, nickel-antimony-titanate, chromium-antimony-titanate, permanent magnetic or magnetisable metals or alloys, concave silicate filler material, aluminium oxide, boron nitride, boron carbide, aluminium nitride, calcium fluoride, and compounds and/or surface-treated forms thereof.

12. Moulding compound according to Claim 11, **characterised in that** the particles of component (C) have an average particle size (D₅₀) of 0.1-40 µm, preferably 0.2-20 µm, especially of 0.3-10 µm, and/or an aspect ratio of at most 10, especially of at most 5, or is mainly formed by such particles and/or **in that** component (C) has absorption coefficients different from zero for electromagnetic, especially UV, VIS or IR radiation, especially for laser radiation, preferably with an absorption capacity in visible and/or infrared radiation spectrum with an absorption coefficient of at least 0.05, preferably at least 0.1, and particularly preferably of at least 0.2

13. Moulding compound according to any of the preceding claims 2-12, **characterised by** the fact that component (A1) is a homo-polyamide and/or co-polyamide made of aliphatic, cycloaliphatic and/or aromatic monomers, preferably of a compound made of a partially crystalline, aliphatic polyamide (A1_1) and/or a partial aromatic polyamide (A1_2), and/or an amorphous polyamide (A1_3), whereby the polyamides in component (A1) are preferably selected from the following group: polyamide 46, polyamide 6, polyamide 66, polyamide 11, polyamide 12, polyamide 1212, polyamide 1010, polyamide 1012, polyamide 1112, polyamide 610, polyamide 612, polyamide 69, polyamide 810, MACM9, MACM10, MACM11, MACM12, MACM13, MACM14, MACM16, MACM18, PACM9, PACM10, PACM11, PACM12, PACM13, PACM14, PACM16, PACM18 or co-polyamides, such as MACMI/12, MACMT/12, 6I/6T/MACMI/MACMT/12, 3- 6T, 6I/MACMI/MACMT, 6I/PACMI/PACMT, 6I/6T/MACMI, MACMI/MACM36, 12/PACMI, 12/MACMT, 6/PACMT, 6/IPDT, MACM10/PACM10, MACM12/PACM12, MXD6, MXD10, MXDI/MXD6, 6T/6I, 6T/66, 6T/10T, 6T/12, 11/10T, 12/10T, 10T/1010, 10T/1012, PA10T/6T, PA6T/10I/10T, PA6T/6I/6, PA10I/10T, 9MT, 12T, as well as mixtures and blends thereof.

14. Moulding compound according to any of the preceding claims, **characterised in that** component (A) or component (A2) is selected according to Claim 2 from the group consisting of: impact resistance modifiers, preferably MBS and/or core-sheath impact resistance modifiers, especially on the basis of methacrylate butadiene styrene, SEBS co-polymers, and/or **in that** the component (D) is selected from a group consisting of: bonding agents, flame retardants, especially flame retardants containing or free of halogen, stabilisers, antioxidant agents, antioxidants, antiozonants, light stabilisers, UV stabilisers, UV absorbers, UV blockers, inorganic heat stabilisers, especially based on copper halide and/or alkali halides, organic heat stabilisers, conductivity additives, carbon black, optical lighteners, processing aids, nucleation agents, crystallisation catalysts, crystallisation inhibitor, flow-inducing agents, lubricants, mould release agents, softening agent, pigments, colours, tracers and compounds thereof.

15. Device, especially a device with electric conductive paths on the basis of a moulding compound according to one any of the preceding claims.

## Revendications

1. Masse de moulage thermoplastique, se composant de:
(A) 20-88 % en poids de matière plastique thermoplastique;
(B) 10-70 % en poids de substances d'addition fibreuses, constituées de:
(B1) 10-70 % en poids de fibres de verre, qui sont constituées essentiellement des composants dioxyde de silicium, oxyde d'aluminium et oxyde de magnésium; et qui présentent un contenu d'oxyde de magnésium d'au moins 5 % en poids et un contenu maximal d'oxyde de calcium de 10 % en poids, ou d'un mélange de ces fibres de verre;
(B2) 0-20 % en poids de fibres de verre différentes des fibres de verre du composant (B1);
(B3) 0-20 % en poids d'autres substances d'addition fibreuses différentes des fibres des composants (B1) et (B2), non basées sur le verre, sélectionnées dans le groupe: fibres de carbone, fibres de graphite, fibres d'aramide, nanotubes;
(C) 2-40 % en poids de charges particulaires;
(D) 0-2 % en poids d'additifs;
dans laquelle la somme de A - D représente 100 % en poids.

2. Masse de moulage selon la revendication 1, **caractérisée en ce que** le composant (A) se compose de polyamide (A1) ou d'un mélange de polyamides, avec la condition que jusque 40 %, de préférence jusque 20 %, jusque 10 % ou jusque 5 % de celui-ci peuvent être remplacés par une matière plastique thermoplastique (A2) non à base de polyamide, dans laquelle de préférence essentiellement aucune de telles matières plastiques thermoplastiques (A2) non à base de polyamide n'est présente.

3. Masse de moulage selon la revendication 2, **caractérisée en ce que** la part du composant (A) se situe dans la plage de 25-82 % en poids, de préférence dans la plage de 30-77 % en poids.

4. Masse de moulage selon une des revendications précédentes 2 à 3, **caractérisée en ce que** la part du composant (B) se situe dans la plage de 15-60 % en poids, de préférence dans la plage de 20-55 % en poids.

5. Masse de moulage selon l'une quelconque des revendications précédentes 2 à 4, **caractérisée en ce que** la part du composant (C) se situe dans la plage de 3 à 25 % en poids, de préférence dans la plage de 3 à 15 % en poids.

6. Masse de moulage selon l'une quelconque des revendications précédentes, **caractérisée en ce que** le composant (A) est sélectionné dans le groupe composé de: polyamide, polycarbonate, polystyrène, poly(méthacrylate) de méthyle, copolymérisat de acrylonitrile-butadiène-styrène, copolymère d'acrylo-nitrile-styrène, polyoléfine, polyoxyméthylène, polyester, en particulier téréphtalate de polyéthylène, téréphtalate de polybutylène, polysulfone, en particulier du type PSU, PESU, PPSU, éther de polyphénylène, sulfure de polyphénylène, oxyde de polyphénylène, polymères cristallins liquides, polyéthercétone, polyétheréthercétone, polyimide, polyamidimide, polyesterimide, polyétheramide, polyesteramide, polyétheresteramide, polyuréthane, en particulier du type TPU, PUR, polysiloxane, polyacrylate, polyméthacrylate, ainsi que des mélanges ou des copolymères à base de ces systèmes, de préférence encore en combinaison avec un ou plusieurs modificateur(s) de résilience,
et/ou **en ce que** la part du composant (B2), de préférence sélectionné dans le groupe se composant de fibres de verre E, fibres de verre A, fibres de verre C, fibres de verre D, fibres de basalte, ainsi que de leurs mélanges, respectivement avec une face de section transversale cruciforme ou on cruciforme, se situe dans la plage de 0 à 10 % en poids, de préférence dans la plage de 0 à 5 % en poids, dans laquelle en particulier le composant (B1) est exclusivement présent.

7. Masse de moulage selon l'une quelconque des revendications précédentes, **caractérisée en ce que** les fibres de verre du composant (B1) sont des fibres de verre à haute résistance basées sur le système ternaire dioxyde de silicium - oxyde d'aluminium - oxyde de magnésium ou sur le système quaternaire dioxyde de silicium - oxyde d'aluminium - oxyde de magnésium - oxyde de calcium, dans laquelle elles présentent de préférence la composition suivante: 58-70 % en poids, de préférence 60-67 % en poids de dioxyde de silicium (SiO₂), 15-30 % en poids, de préférence 20-28 % en poids d'oxyde d'aluminium (Al₂O₃), 5-15 % en poids, de préférence 7-12 % en poids d'oxyde de magnésium (MgO), 0-10 % en poids, de préférence 0-9 % en poids d'oxyde de calcium (CaO) et 0-2 % en poids, de préférence 0-1,5 % en poids d'autres oxydes, comme en particulier le dioxyde de zirconium (ZrO₂), l'oxyde de bore (B₂O₃), le dioxyde titane (TiO₂) ou l'oxyde de lithium (Li₂O) ou une combinaison de ces oxydes.

8. Masse de moulage selon la revendication 7, **caractérisée en ce que** les fibres de verre du composant (B1) sont des fibres de verre à haute résistance ayant la composition suivante: 62-66 % en poids de dioxyde de silicium (SiO₂), 22-27 % en poids d'oxyde d'aluminium (Al₂O₃), 8-12 % en poids d'oxyde de magnésium (MgO), 0-5 % en poids d'oxyde de calcium (CaO), 0-1 % en poids d'autres oxydes, comme en particulier le dioxyde de zirconium (ZrO₂), l'oxyde de bore (B₂O₃), le dioxyde de titane (TiO₂), l'oxyde de lithium (Li₂O) ou une combinaison de ces oxydes.

9. Masse de moulage selon l'une quelconque des revendications précédentes, **caractérisée en ce que** les fibres de verre du composant (B1) présentent une résistance à la traction d'au moins 3700 MPa, de préférence d'au moins 3800 MPa, et de préférence encore d'au moins 4000 MPa, ainsi qu'une élongation à la rupture d'au moins 4,8 %, de préférence d'au moins 4,9 % et de préférence encore d'au moins 5,0 %, et un module E en traction de 75-90 GPa, de préférence de plus de 78 GPa, et de préférence encore de plus de 80 GPa.

10. Masse de moulage selon l'une quelconque des revendications précédentes, **caractérisée en ce que** les fibres de verre du composant (B1) et/ou du composant (B2) se présentent sous la forme de fibres courtes, de préférence sous la forme de verre haché avec une longueur dans la plage de 0,2 à 20 mm, ou sous la forme de fibres sans fin.

11. Masse de moulage selon l'une quelconque des revendications précédentes, **caractérisée en ce que** le composant (C) est constitué de charges particulaires sélectionnées dans le groupe composé de: talc, mica, silicates, quartz, wollastonite, kaolin, acide silicique, carbonate de magnésium, craie, carbonate de calcium moulu ou précipité, chaux, feldspath, pigments inorganiques, comme en particulier le sulfate de baryum, l'oxyde de zinc, le sulfure de zinc, le dioxyde de titane, l'oxyde de fer, l'oxyde de fer-manganèse, des oxydes métalliques, dont en particulier les spinelles, comme par exemple la spinelle de cuivre-fer, l'oxyde de magnésium-aluminium, les oxydes mixtes de cuivre-chrome-manganèse, les oxydes mixtes de cuivre-manganèse-fer, l'oxyde de cuivre-chrome, l'oxyde de zinc-fer, l'oxyde de cobalt-chrome, l'oxyde de cobalt-aluminium, l'oxyde de magnésium-aluminium, les pigments rutiles comme le rutile de titane-zinc, le titanate de nickel-antimoine, le titanate de chrome-antimoine, les métaux magnétiques permanents ou magnétisables, le nitrure de bore, le carbure de bore, le nitrure d'aluminium, le fluorure de calcium ainsi que des mélanges et/ou des formes traitées en surface de ceux-ci.

12. Masse de moulage selon la revendication 11, **caractérisée en ce que** le composant (C) présente des particules avec une taille de particules moyenne (D₅₀) comprise dans la plage de 0,1 à 40 µm, de préférence dans la plage de 0,2 à 20 µm, et de préférence encore dans la plage de 0,3 à 10 µm et/ou un taux d'élancement d'au plus 10, en particulier d'au plus 5 ou est formé essentiellement par de telles particules, et/ou le composant (C) présente un coefficient d'absorption différent de zéro pour le rayonnement électro-magnétique, en particulier un rayonnement UV, VIS ou IR, en particulier pour un rayonnement laser, de préférence avec une capacité d'absorption dans le domaine de rayonnement visible et/ou infrarouge avec un coefficient d'absorption d'au moins 0,05, de préférence d'au moins 0,1, et de préférence encore d'au moins 0,2.

13. Masse de moulage selon l'une quelconque des revendications précédentes 2 à 12, **caractérisée en ce que** le composant (A1) est un homo-polyamide et/ou un copolyamide constitué de monomères aliphatiques, cyclo-aliphatiques et/ou aromatiques, de préférence un mélange d'un polyamide aliphatique partiellement cristallin (A1_1) et/ou d'un polyamide partiellement aromatique (A1_2), et/ou d'un polyamide amorphe (A1_3), dans laquelle les polyamides du composant (A1) sont de préférence sélectionnés dans le groupe suivant: polyamide 46, polyamide 6, polyamide 66, polyamide 11, polyamide 12, polyamide 1212, polyamide 1010, polyamide 1012, polyamide 1112, polyamide 610, polyamide 612, polyamide 69, polyamide 810, MACM9, MACM10, MACM11, MACM12, MACM13, MACM14, MACM16, MACM18, PACM9, PACM10, PACM11, PACM12, PACM13, PACM14, PACM16, PACM18 ou des copolyamides, comme par exemple MACMI/12, MACMT/12, 6I/6T/MACMI/MACMT/12,3-6T,6I/MACMI/MACMT, 6I/6T/PACMI/-PACMT, 6I/6T/MACMI, MACMI/MACM36, 12/PACMI, 12/MACMT, 6/PACMT, 6/IPDT, MACM10/PACM10, MACM12/PACM12, MXD6, MXD10, MXDI/MXD6, 6T/6I, 6T/66, 6T/10T, 6T/12, 11/10T, 12/10T, 10T/1010, 10T/1012, PA10T/6T, PA6T/10I/10T, PA6T/6I/6, PA10I/10T, 9MT, 12T, ainsi que des mélanges ou des mixtures de ceux-ci.

14. Masse de moulage selon l'une quelconque des revendications précédentes, **caractérisée en ce que** le composant (A) ou le composant (A2) selon la revendication 2 est sélectionné dans le groupe composé de: modificateurs de résilience, de préférence des modificateurs MBS et/ou modificateurs de résilience de noyau-enveloppe, en particulier à base de méthacrylate-butadiène-styrène, de copolymères SEBS, et/ou **en ce que** le composant (D) est sélectionné dans le groupe composé de: agents d'adhérence, agents retardateurs de flamme, en particulier agents retardateurs de flamme avec halogène ou sans halogène, agents stabilisants, agents antivieillissement, antioxydants, agents anti-ozone, agents de protection contre la lumière, agents stabilisants aux UV, absorbeurs d'UV, bloqueurs d'UV, agents stabilisants à la chaleur inorganiques, en particulier à base d'halogénures de cuivre et/ou d'halogénures alcalins, agents stabilisants à la chaleur organiques, additifs de conductivité, suie, agents éclaircissants optiques, adjuvants de traitement, agents de nucléation, accélérateurs de cristallisation, retardateurs de cristallisation, adjuvants d'écoulement, lubrifiants, agents de démoulage, plastifiants, pigments, colorants, substances de marquage et mélanges de ceux-ci.

15. Composant, en particulier composant avec des pistes conductrices électriques, à base d'une masse de moulage selon l'une quelconque des revendications précédentes.
